(19) Europäisches Patentamt
European Patent Office
Office européen des brevets

(11) **EP 2 834 078 B1**

(12) **EUROPÄISCHE PATENTSCHRIFT**

(45) Veröffentlichungstag und Bekanntmachung des Hinweises auf die Patenterteilung:
**28.08.2019   Patentblatt 2019/35**

(21) Anmeldenummer: **12714635.5**

(22) Anmeldetag: **02.04.2012**

(51) Int Cl.:
***B44C 5/04*** *(2006.01)*

(86) Internationale Anmeldenummer:
**PCT/EP2012/055967**

(87) Internationale Veröffentlichungsnummer:
**WO 2013/149644 (10.10.2013 Gazette 2013/41)**

(54) **DIREKT-BEDRUCKTES, BESCHICHTETES PANEEL**

DIRECTLY PRINTED, COATED PANEL

PANNEAU À REVÊTEMENT ET À IMPRESSION DIRECTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.02.2015   Patentblatt 2015/07**

(60) Teilanmeldung:
**16156032.1 / 3 042 785**

(73) Patentinhaber: **Xylo Technologies AG**
**9052 Niederteufen (CH)**

(72) Erfinder: **DÖHRING, Dieter**
**01561 Großenhain (DE)**

(74) Vertreter: **Mader, Joachim et al**
**Bardehle Pagenberg Partnerschaft mbB**
**Patentanwälte, Rechtsanwälte**
**Prinzregentenplatz 7**
**81675 München (DE)**

(56) Entgegenhaltungen:
**EP-A2- 2 269 744          WO-A1-2008/061791**
**WO-A2-2010/070474        DE-A1-102009 044 092**
**DE-A1-102010 011 602     US-A1- 2002 081 393**

**Beschreibung**

**1. Gebiet der Erfindung**

Die vorliegende Erfindung betrifft ein beschichtetes Paneel, insbesondere ein Wand, Decken oder Fußboden-Paneel, sowie ein Verfahren zur Beschichtung eines solchen Paneels.

**2. Hintergrund**

Aus dem Stand der Technik ist eine Vielzahl von Paneelen für Wand, Decken oder Fußbodenbeläge bekannt. Dabei haben in den letzten Jahren insbesondere sogenannte Laminatpaneele eine weite Verbreitung erfahren. Laminatpaneele sind relativ kostengünstig und lassen sich gut verarbeiten. Sie basieren üblicher Weise auf einer Trägerplatte (Trägerschicht) aus MDF- oder HDF-Werkstoff, auf dessen Oberseite ein mit einem Harz imprägniertes Dekorpapier aufgebracht ist. Über dem Dekorpapier wird üblicherweise zudem ein sogenanntes Overlaypapier angebracht, um die Haltbarkeit der Oberfläche zu verbessern. Die verwendeten Papiere sind mit Harzen imprägniert, wie beispielsweise mit Aminoharzen, die durch Verpressen unter Einwirkung von Hitze und Druck aushärten. Um die Abriebfestigkeit der Oberflächen zu erhöhen werden die Harze zudem häufig mit abriebfesten Partikeln versehen.

In einer Weiterentwicklung derartiger Laminatpaneele wurden sogenannte direkt bedruckte Paneele entwickelt. Bei diesen direkt bedruckten Paneelen kommen in der Regel keine Papiere mehr zur Anwendung, insbesondere kein Dekorpapier. Die Dekorschicht wird vielmehr unter Verwendung von Dispersionsfarben mittels eines Tiefdruckverfahrens direkt auf die Oberfläche des Paneels gedruckt, welches zu diesem Zweck üblicherweise mit einer geeigneten Grundierung versehen wird. Die Grundierung wird hierzu üblicherweise über Walzen aufgetragen. Nach Trocknen der Dekorschicht werden anschließend mehrere Harzschichten aufgetragen und ausgehärtet. Die Harzschichten dienen als Schutzschicht und abriebfeste Oberfläche. Um die Abriebfestigkeit zu erhöhen werden auch hier in der Harzschicht häufig abriebfeste Partikel, üblicherweise Korund, eingebettet.

Aus der WO 2007/042258 A1 ist beispielsweise ein Verfahren zur Direkt-Beschichtung einer Holzwerkstoffplatte bekannt, bei dem in einem einzigen Beschichtungsschritt eine relativ dicke Schutzschicht aus Kunststoffmaterial auf die Oberfläche einer Platte aufgetragen wird. Das verwendete Kunststoffmaterial ist dabei ein polymerisationsfähiges Acrylatsystem, das über eine Polymerisation aushärtet. Die Polymerisation wird dabei durch Bestrahlung ausgelöst, so dass durch die Dicke der aufgetragenen Schicht ein vollständiger Umsatz stattfindet.

Die WO 2008/061791 A1 desselben Anmelders stellt eine Weiterentwicklung des bekannten Standes der Technik dar. Der Kern der Verbesserung dieser Druckschrift liegt darin, dass auf die Oberfläche eines Paneels zwei flüssige Polymerschichten nass in nass aufgetragen werden, so dass eine teilweise Vermischung der Beschichtungsmittel stattfindet. Diese beiden nass in nass aufgetragenen Schichten werden dann gemeinsam ausgehärtet, wobei die ausgehärtete resultierende Beschichtung aufgrund der teilweisen Durchmischung einen Härtegradient aufweist, wobei die Härte der Beschichtung mit zunehmender Tiefe von der Oberfläche der resultierenden Beschichtung her gesehen abnimmt. Das Paneel kann mit einem Dekorpapier versehen sein, wobei die Beschichtung dann auf das Dekorpapier aufgebracht wird.

Obwohl insbesondere die WO 2008/061791 einen beträchtlichen Fortschritt im Stand der Technik darstellt, so besteht immer Bedarf für Verbesserung. Daher stellt sich die vorliegende Erfindung die Aufgabe den vorbekannten Stand der Technik zu verbessern und insbesondere ein beschichtetes Paneel bereitzustellen, bei dem die Haftfestigkeit der Schichten erhöht ist und die deshalb besondere gute Werte beim Gitterschnitttest nach DIN ISO 2409 erreichen.

Referenzdokument WO 2010/070474 A2 offenbart Paneele eines Typs, der mindestens ein Substrat und eine Deckschicht mit einem Motiv umfasst, wobei die Deckschicht auf dem Substrat vorgesehen ist.

Dokument DE 10 2010 011 602 A1 offenbart ein Verfahren bei dem eine Trägerplatte zunächst mit einer Kunststofffolie kaschiert wird, welche danach bedruckt wird. Zwei UV-Lackschichten werden nass-in-nass auf die teilweise ausgehärtete Tinte aufgetragen. Die Lackschichten werden zusammen mit der Tinte ausgehärtet, wodurch die Tinte mit der Lack eine Verbindung eingeht.

Diese und andere Aufgaben, die beim Lesen der folgenden Beschreibung noch genannt werden oder vom Fachmann erkannt werden können, werden mit einem Paneel nach Anspruch 1 und einem Verfahren nach Anspruch 10 gelöst.

**3. Ausführliche Beschreibung der Erfindung**

Ein erfindungsgemäßes Paneel umfasst eine Trägerschicht mit einer Vorderseite und einer Rückseite. Die Trägerschicht ist beispielsweise eine Platte aus einem Holzwerkstoff, wie etwa MDF (Mitteldichte Holzfaserplatte) oder HDF (Hochdichte Holzfaserplatte), eine Spanplatte, eine OSB-Platte (Oriented Strand Board) oder ähnliches. Sie kann jedoch auch aus einem Kunststoffmaterial, wie insbesondere PVC bestehen. Zumindest an der Vorderseite der Trägerschicht ist ein Schichtsystem vorgesehen, welches von der Trägerschicht nach außen gesehen eine Grundierungsschicht umfasst, eine Dekorschicht und eine Polymerschicht als Nutzschicht, die vorzugsweise einen Härtegradienten aufweist gemäß der Eingangs beschriebenen WO 2008/061791 desselben Anmelders. Das Besondere an der Dekorschicht liegt in der Verwendung einer polymerisierbaren Druckfarbe (Tinte), insbesondere basierend auf einem polymerisierbaren Acrylat. Die Dekorschicht wird vorzugsweise direkt auf das Paneel gedruckt und besteht dann praktisch aus der Druckfarbe. Alternativ kann jedoch ein bedrucktes Papier als Dekorschicht verwendet werden (Dekorpapier), wie es bei Laminatpaneelen üblich ist.

Üblicherweise kommen im Stand der Technik als Druckfarbe (Tinte) Dispersionsfarben zum Einsatz, wie insbesondere Acrylfarben. Diese Dispersionsfarben werden regelmäßig bei dem üblicherweise zum Einsatz kommenden Tiefdruckverfahren verwendet. Dispersionsfarben sind Druckfarben, die in der Regel aus drei Hauptbestandteilen bestehen, nämlich (a) einem Lösungsmittel (üblicherweise Wasser), (b) Bindemittel in Form von Kunststoffpolymeren (Acrylate), die sich bei Verdunstung des Lösungsmittels zusammenlagern und eine feste Schicht bilden, sowie (c) Farbpigmente zur Erzeugung der gewünschten Deckung und des gewünschten Farbtons. Die Härtung dieser Dispersionsfarben erfolgt also nicht durch eine Polymerisation, sondern durch ein Verflüchtigen des Lösungsmittels, da die Bindemittel bereits als Polymere vorliegen. Die in der Dispersion enthaltenen Polymere verbinden sich bei Verdunstung des Bindemittels auf rein physikalische Weise und bilden eine feste, geschlossene Schicht.

Die Anmelder haben nun überraschend festgestellt, dass verbesserte Hafteigenschaften des Schichtsystems erreicht werden können, wenn nicht die üblichen Dispersionsfarben verwendet werden, sondern stattdessen polymerisierbare Druckfarben verwendet werden. Dies gilt insbesondere bei der bevorzugten Anwendung mit einer Polymerschicht, insbesondere mit Härtegradient. Der positive Effekt ist besonders ausgeprägt, wenn die Druckfarbe der Dekorschicht und die Polymerschicht gemeinsam ausgehärtet bzw. polymerisiert werden (wenn die Dekorschicht direkt aufgedruckt wird, wie etwa im Digitaldruck, besteht die Dekorschicht quasi aus der Druckfarbe). Unter Aushärtung einer Polymerschicht beziehungsweise eines polymerisierbaren Druckfarbe (wie polymerisierbare Acrylate bzw. UVreaktive Farben im Allgemeinen) wird hierbei die chemische Reaktion verstanden, die bei der Polymerisation stattfindet, wie insbesondere eine Polykondensation. Hiervon zu unterscheiden ist das Trocknen derartiger Schichten, bei dem lediglich das Lösungsmittel, wie etwa der Wassergehalt der Druckfarbe beziehungsweise der Polymerschichten verdunstet bzw. auf rein physikalische Weise reduziert wird. Durch die gemeinsame Aushärtung (Polymerisation/Polykondensation) der Acrylatsysteme von Druckfarbe und Polymerschicht erfolgt eine chemische Vernetzung an der Grenzfläche der beiden Schichten, von der angenommen wird, dass sie für die verbesserte Haftung der Schichten verantwortlich ist. Die herkömmlich verwendeten Dispersions-Druckfarben weisen keine polymerisierbaren Acrylatsysteme auf, so dass keine derartige chemische Vernetzung zwischen Druckfarbe, also der Dekorschicht, und der Polymerschicht stattfindet.

Polymerisierbare Acrylate wie sie bei der vorliegenden Erfindung bevorzugt zum Einsatz kommen umfassen als Hauptbestandteile Acrylat-Monomere, -Oligomere und optional Fotoinitiatoren. Die Fotoinitiatoren bewirken unter Einwirkung von Strahlung eine Polymerisation der Monomere bzw. Oligomere, wodurch die Druckfarbe schnell aushärtet. Die Verwendung einer Druckfarbe basierend auf einem polymerisierbaren Acrylat zusammen mit einer darauf aufgebrachten Polymerschicht (als Nutzschicht) erlaubt vorteilhaft den Verzicht auf eine Primerschicht, wie sie im Stand der Technik üblicherweise notwendig war, um die Haftung der Polymerschicht auf der Dekorschicht zu verbessern. Es hat sich gezeigt, dass die im Stand der Technik üblicherweise verwendeten Dispersionsfarben nur eine unbefriedigende Haftung mit der darauf aufgebrachten Polymerschicht mit Härtegradient erreichen. Mit der Verwendung eines Primers zwischen der Dekorschicht und der Polymerschicht (Nutzschicht) sollte dieser Nachteil im Stand der Technik ausgeräumt werden.

Die für die vorliegende Erfindung verwendeten Druckfarben sind polymerisierbare Druckfarben und insbesondere polymersierbare Acrylatsysteme. Polymerisierbare Druckfarben enthalten als Hauptbestandteile Bindemittel, nämlich reaktive Doppelbindungen enthaltene Harze; Monomere bzw. Oligomere, wie etwa Acrylatmonomere und Acylatoligomere; optional Fotoinitiatoren für strahlenhärtbare Druckfarben; Additive wie etwa Entschäumer, Verlaufsadditive, Verdickungsmittel u.a.; Farbpigmente wie Phthalocyanin-Pigmente, Azofarbstoffe, Indigoide Farbmittel, Anilinschwarz und/ oder Pigmentruße; sowie Füllstoffe zur Erzielung bestimmter physikalisch technischer Eigenschaften. Generell bevorzugt sind die verwendeten Druckfarben für die vorliegende Erfindung weiter strahlenhärtbare, wie insbesondere durch UV-Strahlen härtbare (UVhärtbare) Druckfarben. Besonders bevorzugt ist die Druckfarbe ein UVhärtbares polymerisierbares Acrylatsystem.

Vorzugsweise basiert die Grundierung auf einer wässrigen Dispersion (bevorzugt einem wässrigen Acrylatsystem), welche eine geeignete Zusammensetzung aufweist, so dass es mittels eines Vorhangbeschichtungsverfahrens aufgetragen werden kann. Im Stand der Technik wurde die Grundierung bisher üblicherweise in einem Walzenauftragsverfahren auf die Oberfläche der Trägerschicht aufgetragen. Bei derartigen Walzenauftragsverfahren wird das Beschichtungsmaterial (die Grundierung) direkt von der Walze auf die zu beschichtenden Oberflächen abgegeben oder indirekt über ein Beschichtungsband, das mittels einer Presswalze auf die zu beschichtenden Bauteile gepresst wird. Die Erfinder der vorliegenden Anmeldung haben festgestellt, dass Oberflächen die auf diese Weise hergestellt wurden insbesondere bei fein detaillierten Druckbildern, wie sie typischerweise bei der Nachahmung von Echtholzoberflächen notwendig sind, nicht die eigentlich zu erwartende Auflösung und Schärfe erreichen. Insbesondere kommt es bei Verwendung von polymerisierbaren Druckfarben häufig zu störenden Streifen im Druckbild. Die Erfinder haben nun überraschend festgestellt, dass diese Probleme vermieden werden können, wenn anstatt eines Walzenauftragsverfahrens ein Vorhangbeschichtungsverfahren verwendet wird. Es wird vermutet, dass die Walzen bei Walzenauftragsverfahren, sei es, dass das Beschichtungsmaterial direkt von der Walze auf die zu beschichtende Oberfläche aufgetragen wird oder indirekt über ein Beschichtungsband, aufgrund ihrer Rundung in der übertragenen Beschichtung eine minimale Welligkeit der Oberfläche erzeugen. Die Berge und Täler dieser welligen Oberfläche sind jedoch so klein, dass die so hergestellten Oberflächen mit herkömmlichen Dispersionsfarben gut bedruckt werden können. Es wird jedoch vermutet, dass diese sehr geringe Unebenheit der so beschichteten Oberflächen bei der Verwendung von polymerisierbaren Druckfarben für die genannten Probleme verantwortlich sind. In jedem Fall kann durch das Gießen der Grundierung die unerwünschte Streifenbildung bei der Verwendung von polymerisierbaren Druckfarben (insbesondere polymerisierbaren Acrylatsystemen) wirksam unterbunden werden.

Vorhangbeschichtungsverfahren und entsprechende Anlagen sind dem Fachmann aus dem Stand der Technik (beispielsweise aus der EP 1 252 937 A1) vorbekannt, so dass auf eine detaillierte Beschreibung derselben hier verzichtet werden kann. Wichtig ist, dass bei Vorhangbeschichtungsverfahren ein flüssiger Vorhang von Beschichtungsmaterial erzeugt wird, durch den die zu beschichtenden Bauteile geführt werden. Ein Auftrag über Walzen findet nicht statt.

Die Gesamtdicke der Polymerschicht (Nutzschicht) nach dem Aushärten sollte vorzugsweise eine Dicke von 20 - 300 $\mu$m haben, mehr bevorzugt von 40 - 250 $\mu$m, noch mehr bevorzugt von 50 - 220 $\mu$m und am meisten bevorzugt von 60 - 180 $\mu$m. Bevorzugte Materialien für die Polymerschicht sind: 1,6 Hexandioldiacrylat, Polyesteracrylat, Polyurethanacrylsäureester und Dipropylendiglycoldiacrylat. Bevorzugte Werte für die Dicke der Grundierung (nach Aushärtung) liegen bei 20 - 300 $\mu$m, mehr bevorzugt bei 40 - 250 $\mu$m, noch mehr bevorzugt bei 50 - 220 $\mu$m und am meisten bevorzugt bei 60 - 180 $\mu$m. Generell ist es bevorzugt, dass die Grundierung vorzugsweise keinen UV-aushärtbaren Lack enthält. Die Dicke der Dekorschicht beträgt üblicherweise nur wenige Nano- bis Mikrometer, vorzugsweise 1 bis 5 $\mu$m; mehr bevorzugt 2 bis 4 $\mu$m, um eine ausreichende Deckung der Farbe zu erreichen.

Wie Eingangs erwähnt, ist gemäß der Erfindung die Druckfarbe der Dekorschicht gemeinsam mit der darüber aufgebrachten Polymerschicht ausgehärtet (polymerisiert), vorzugsweise durch eine gemeinsame Bestrahlung derselben. Hierdurch kommt es an der Grenzschicht zwischen der Druckfarbe und der darüber aufgebrachten Polymerschicht teilweise zu einer chemischen Vernetzung der verwendeten Polymere. Es hat sich gezeigt, dass dabei eine besonders gute Haftung der Polymerschicht auf der Trägerschicht erreicht werden kann. Im Stand der Technik war es bisher immer notwendig zusätzlich zwischen der Dekorschicht und der aufgebrachten Polymerschicht einen Primer zu verwenden, um die Haftung der Polymerschicht zu verbessern. Mit der bevorzugten Ausführungsform der Erfindung kann dabei nicht nur auf den Primer verzichtet werden, sondern es hat sich sogar gezeigt, dass die erreichte Haftung der Polymerschicht im Vergleich zu herkömmlichen, primerbasierten Systemen, verbessert werden kann.

Bevorzugte Ausführungsformen der Erfindung erreichen beim Gitterschnitttest nach DIN ISO 2409 einen Gitterschnittkennwert von mindestens zwei, vorzugsweise mindestens eins und am meisten bevorzugt von null. Diese Werte beziehen sich selbstverständlich auf das fertige Paneel, wenn alle Schichten ausgehärtet sind.

Im Folgenden wird die Erfindung anhand einiger nicht-beschränkender Beispiele erläutert:

**Beispiel 1: Paneel mit herkömmlichem indirekten Tiefdruck**

In einem ersten Schritt wird eine HDF-Trägerplatte mit einer Stärke von 8 mm über ein Walzenauftragswerk mit einem Primer auf Basis einer handelsüblichen wässrigen Acrylatdispersion versehen. In einem nächsten Schritt erfolgt das Glätten der Platte über ein Walzenauftragswerk mittels einer Spachtelmasse basierend auf einer hochgefüllten wässrigen Acrylatdispersion. Anschließend wird ein Druckgrund (Grundierung) auf Basis einer mit Füllstoffen und Farbpigmenten versetzten wässrigen Acrylatdispersion mittels Gießverfahren (d.h. einem Vorhangbeschcihtungsverfahren) appliziert.

Nach jedem dieser Beschichtungsschritte erfolgt ein Zwischentrocknen bei Temperaturen zwischen 80 und 200 °C. Die so behandelten Platten werden einer Druckmaschine im Wesentlichen bestehend aus einer Gravurwalze und einer Gummiwalze für die Übertragung des Druckbildes vom Gravurzylinder auf die Platte zugeführt. Das Druckbild wird über drei nachgeschaltete Druckwerke erzeugt, wobei durch jedes Druckwerk eine eigene Dispersions-Druckfarbe bestehend aus Farbpigmenten und einer wässrigen Acrylatdispersion aufgetragen wird. Bei einer Imitation eines dunklen Nußbaumholzes werden beispielsweise 5 g/m$^2$ Druckfarbe appliziert. Auf die Druckfarbenschicht wird im weiteren Prozess ein handelsüblicher UV-Primer über ein Walzenauftragswerk aufgetragen. Schließlich erfolgt der Auftrag eines doppelbindungshaltigen, mit Photoinitiatoren versehenen strahlenhärtbaren Oligomers. Auf diese Schicht wird über eine Strukturträgerfolie eine Schicht aus einem weiteren doppelbindungshaltigen, mit Photoinitiatoren versehenen strahlenhärtbaren Oligomers gelegt und mittels einer UV-Strahlung polymerisiert. Nach Abziehen der Folie erhält man die fertige beschichtete Dekorplatte, die in einem weiteren Prozess in Paneele zerteilt werden kann, wobei an diese Paneele bekannte Kopplungselemente angefügt werden. Die so beschichtete Platte wird einem Labortest unterzogen. Beim Gitterschnitttest wird in diesem Fall eine 3 erzielt. Generell gilt hier, je dicker die Druckfarbenschicht für die Reproduktion eines Dekors aufgetragen werden muss, desto schlechter fällt das Ergebnis beim Gitterschnitttest aus. Damit erschwert sich das Anfräsen von Profilen für die Kopplungselemente, denn es entstehen schnell Kantenausbrüche an der Polymerschicht.

**Beispiel 2:** Paneele, bei denen das Druckbild mit strahlenhärtenden Druckfarben erzeugt wird

Es wird wieder eine 8 mm starke HDF-Trägerplatte verwendet und wie in Beispiel 1 beschrieben mit wässrigem Primer, Spachtel und Druckgrund versehen. Auf der so behandelten Platte wird mittels Digitaldrucker das gleiche Dekorbild wie in Beispiel 1 erzeugt. Hierbei werden jedoch keine Dispersionsfarben verwendet, sondern UVstrahlenhärtende Digitaldruckfarben. Für die Erzeugung des Druckbildes wird eine Farbmenge von etwa 2 g/m$^2$ benötigt. Die Farbe wird zunächst mit 150 mJ/cm$^2$ (Quecksilber) fixiert. Darauf erfolgt der Auftrag von 2 g/m$^2$ einer ersten UV-härtenden Schicht, die vorwiegend Dipropylenglycoldiacrylat enthält. Auf diese nicht bestrahlte Schicht wird ein doppelbindungshaltiges, mit Photoinitiatoren versetztes Oligomer wie in Beispiel 1 aufgetragen. Anschließend wird auf diese Schicht mittels Strukturgeberfolie eine zweite Oligomerschicht wie in Beispiel 1 aufgelegt. Das Schichtpaket wird einer UV-Strahlenquelle zugeführt und dabei werden die strahlenhärtenden Schichten polymerisiert. Die daraus resultierende Polymerschicht umfasst die Druckfarbe und alle darüber liegenden Schichten. Auch auf dieser Basis hergestellte Paneele werden einem Labortest unterzogen. Beim Gitterschnitttest treten keinerlei Abplatzungen innerhalb der verschiedenen Beschichtungsebenen auf. Man kann allenfalls beim Abziehen des Klebebandes die HDF-Trägerplatte in sich beschädigen.

Die vorliegende Erfindung betrifft auch ein Verfahren zur Beschichtung eines Paneels. Bei diesem erfindungsgemäßen Verfahren wird auf eine Trägerplatte eine Grundierung, vorzugsweise mittels eines Vorhangbeschichtungsverfahrens aufgetragen. Nach einem optionalen Trocknen der Grundierung wird dann eine Dekorschicht mittels einer polymerisierbaren Druckfarbe, z.B. basierend auf einem polymerisierbaren Acrylat, vorzugsweise im Digitaldruck, aufgebracht, d.h. direkt bedruckt. Als Dekor sind alle üblichen Dekore denkbar, wie insbesondere die Imitation von Echtholzoberflächen. Anschließend kann in einem optionalen Schritt ein teilweises Aushärten der Druckfarbe erfolgen. Dabei sollten mindestens 10 % des polymerisierbaren Acrylats in der Druckfarbe ausgehärtet werden aber weniger als 50 Prozent, mehr bevorzugt weniger als 30 %, noch mehr bevorzugt weniger als 20 %. Es hat sich gezeigt, dass dieses teilweise Aushärten zu verbesserten Ergebnissen beim Gitterschnitttest führt. Nach dem Auftragen der Dekorschicht wird dann ein erstes flüssiges Beschichtungsmittel (erstes Polymer) auf die nicht vollständig ausgehärtete Druckfarbe aufgebracht und vorzugsweise in einem zweiten Schritt zumindest ein zweites flüssiges Beschichtungsmittel (zweites Polymer) auf das noch feuchte erste Beschichtungsmittel, so dass an der Grenzfläche eine teilweise Vermischung der Beschichtungsmittel stattfindet. In einem darauffolgenden Schritt wird das Beschichtungsmittel, bzw. die beiden aufgetragenen Beschichtungsmittel gemeinsam mit der Druckfarbe vorzugsweise mittels Strahlung ausgehärtet. Dabei dürfen die ersten und zweiten Beschichtungsmittel nicht vollständig vermischt sein, wobei nach dem Aushärten die Härte der Beschichtung mit zunehmender Tiefe von der Oberfläche der resultierenden Beschichtung hergesehen abnimmt. Dies wird in der Figurenbeschreibung näher erläutert.

Die in Zusammenhang mit der Beschreibung des Paneels gemachten Angaben gelten analog selbstverständlich auch für das erfindungsgemäße Verfahren. Dies gilt insbesondere für die Angaben zu den bevorzugten Materialien für Grundierung, Druckfarbe und Polymerschicht, die Dicken derselben etc.

Ein Kern der Erfindung liegt wie erwähnt im gemeinsamen Aushärten der Beschichtungsmittel (Polymerschicht) und der polymerisierbaren Druckfarbe, insbesondere einer Druckfarbe umfassend ein polymerisierbares Acrylat. Das heißt, das Beschichtungsmittel wird flüssig auf die noch nicht ausgehärtete Druckfarbe aufgebracht, so dass auch hier im Grenzbereich eine gewisse Durchdringung der verschiedenen Materialien stattfindet. Bei der anschließenden gemeinsamen Aushärtung entstehen somit chemische Bindungen zwischen Druckfarbe und Beschichtungsmittel, was nach Auffassung der Erfinder zu den besonders guten mechanischen Widerstandswerten der so beschichteten Paneele führt. Im Stand der Technik erfolgte die Haftung im Wesentlichen nur über physikalische Vorgänge, da keine gemeinsame Aushärtung, das heißt Polymerisation, zwischen der Druckfarbe und den aufgebrachten Polymerschichten stattfindet.

Für die Beschichtungsmittel der ersten als auch der zweiten und eventuell weiterer Polymerschichten kann eine einzelne polymerisierbare Substanz ausgewählt werden oder Mischungen aus derartigen Substanzen. Besonders geeignete Substanzen sind polymerisationsfähige Acrylate im Allgemeinen und insbesondere die Stoffe: 1,6-Hexandioldiacrylat, Polyesteracrylat, Polyurethanacrylsäureester und Dipropylenglycoldiacrylat. Für die erste Schicht ist eine Mischung aus 1,6-Hexandioldicarylat und Polyesteracrylat besonders geeignet und für die zweite Schicht eine Mischung aus Polyurethanacrylsäureesther und Dipropylenglycoldiacrylat. Weiter können in den Beschichtungsmitteln Zusatzstoffe vorhanden sein, wie etwa Flieshilfsstoffe, Benetzungshilfsstoffe, Farbstoffe, abriebfeste Partikel etc. Wesentlich dabei ist, dass diese weiteren Bestandteile die oben beschriebene teilweise Durchdringung und damit Vernetzung der ersten und zweiten Schichten zulassen und eine Polymerisation weiterhin möglich ist, wenn ein Härtegradient erwünscht ist.

Generell bevorzugt enthält die Grundierung selbst ebenfalls Farbstoffe, so dass die aufgebrachte Grundierungsschicht eine geeignete homogene Farbe hat. Diese Farbe ist vorzugsweise auf das später aufzutragende Dekor abgestimmt. Soll die Dekorschicht beispielsweise ein dunkles Eichenholz darstellen, so ist die Grundierung vorzugsweise in einem entsprechenden dunklen Braunton vorgesehen.

## 4. Detaillierte Beschreibung von beispielhaften Ausführungsformen

Im Folgenden wird nun anhand der beigefügten Diagramme und Figuren eine detaillierte Beschreibung von beispielhaften Ausführungsformen gegeben. Dabei wird anhand der Figuren 1 bis 6 die Herstellung einer Polymerschicht mit Härtegradient analog zur WO 2008/061791 erläutert.

Figur 1 ist eine schematische Darstellung eines Beschichtungsprozesses zur Herstellung einer Polymerschicht mit Härtegradient nach dem Stand der Technik;

Figuren 2a bis 2c sind schematische Darstellungen in denen der Ablauf der Vermischung zweier flüssiger Schichten dargestellt ist;

Figuren 3 bis 5 sind Diagramme, die den Verlauf der Härte in Abhängigkeit von der Tiefe der Beschichtung darstellen;

Figur 6 zeigt ein beispielhaftes erfindungsgemäßes Paneel in schematischer Übersicht.

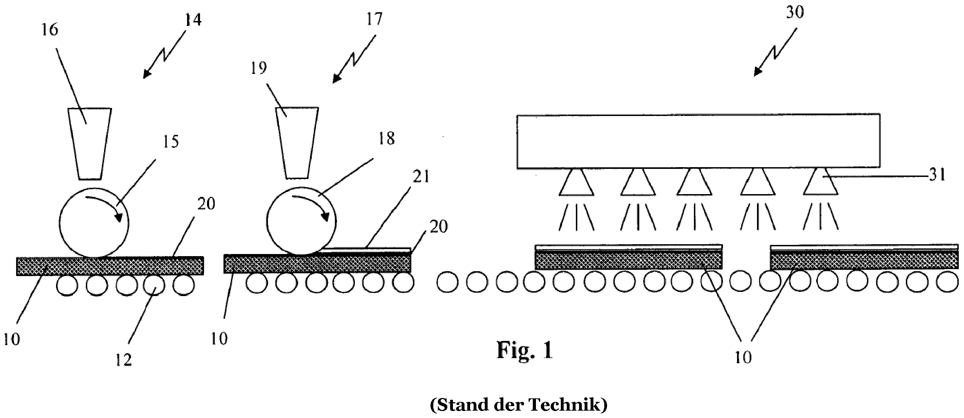

In Fig. 1 ist schematisch eine Beschichtungsanlage zur Beschichtung von Holzwerkstoffplatten 10 gezeigt. Die Holzwerkstoffplatten 10, wie beispielsweise Massivholzplatten, HDF-, MDF- oder Spanplatten, werden über eine Rollenförderanlage 12 durch die verschiedenen Stationen der Beschichtungsanlage geführt. In einer ersten Beschichtungsstation 14 wird mittels einer rotierenden Auftragswalzewalze 15 ein erstes flüssiges Beschichtungsmittel 20 in einer Durchlaufbeschichtung auf die Holzwerkstoffplatten 10 aufgetragen. Die Auftragswalze 15 wird über eine Zufuhreinrichtung 16 mit Beschichtungsmittel versorgt. In der zweiten Beschichtungsstation 17 wird über eine weitere rotierende Auftragswalze 18 auf das noch feuchte erste Beschichtungsmittel 20 ein zweites flüssiges Beschichtungsmittel 21 aufgetragen. Die Auftragswalze 18 wird mittels einer Zufuhreinrichtung 19 mit dem zweiten flüssigen Beschichtungsmittel versorgt. Der Auftrag kann selbstverständlich auch mit jedem anderen geeigneten Auftragsverfahren erfolgen, wie zum Beispiel über eine Sprühanlage oder einen Streichrakel oder ähnliches. Wichtig ist dabei nur, das die Auftragung der zweiten Schicht erfolgt, solange die erste Schicht noch feucht genug ist, so dass es zu einer teilweisen Vermischung der Schichten kommt. Außerdem können nach der zweiten Beschichtungsstation 17 selbstverständlich noch weitere Beschichtungsstationen vorgesehen sein, um beispielsweise ein drittes flüssiges Beschichtungsmittel auf das noch feuchte zweite Beschichtungsmittel 21 aufzutragen oder auch zusätzliche Stationen, um abriebfeste Partikel auf bzw. in die feuchten Schichten einzubringen.

Nach dem Verlassen der Beschichtungsstation 17 werden die beschichteten Platten 10 zu einer Aushärtstation 30 transportiert, wo die Schichten mittels UV-Strahlern 31 ausgehärtet werden. Auf ihrem Weg von der Beschichtungsstation 17 zu der Aushärtstation 30 kommt es zu einer teilweisen Vermischung der flüssigen Beschichtungsmittel 20 und 21, die insbesondere an den Grenzflächen der beiden Beschichtungsmittel stattfindet. Die Durchmischung ist dabei naturgemäß umso größer, je näher man sich an dieser Grenzfläche der beiden Schichten befindet. Durch das Aushärten der Schichten in der Aushärtstation 30 wird der Vermischungsprozess gestoppt und das einmal eingestellte Vermischungsverhältnis und damit die mechanischen Eigenschaften der erzeugten Beschichtung festgelegt. Das Ausmaß der Vermischung an den Grenzflächen - die von selbst und vorzugsweise ohne mechanische Einwirkung von außen stattfindet - hängt dabei von der Zeitdauer ab, die zwischen der Auftragung des zweiten Beschichtungsmittels 21 auf das noch feuchte erste Beschichtungsmittel 20 und der Aushärtung in der Aushärtstation 30 vergeht. Zudem wird die Vermischung der beiden Beschichtungsmittel auch von der jeweiligen Viskosität der Beschichtungsmittel beeinflusst, wobei als Faustregel gilt, das je höher die Viskosität ist, umso geringer die Durchmischung pro Zeiteinheit ist.

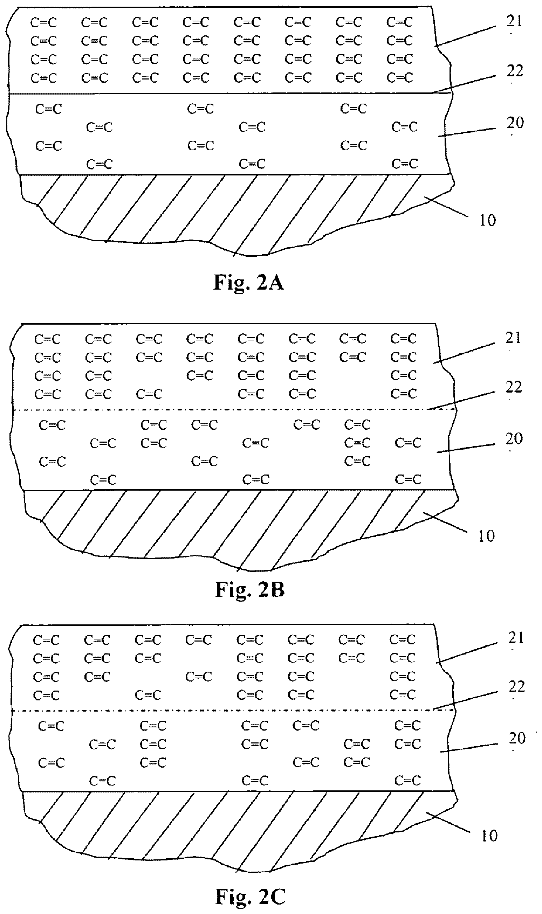

Das Prinzip der Durchmischung der beiden aufgetragenen Beschichtungsmittel ist am besten aus der schematischen Darstellung der Fig. 2A bis 2C zu erkennen. Fig. 2A zeigt dabei den Zustand der beiden auf eine Holzwerkstoffplatte 10 aufgetragenen Beschichtungsmittel 20 und 21 unmittelbar nach Auftragung des zweiten Beschichtungsmittels 21. Zu diesem Zeitpunkt hat praktisch noch keine Vermischung stattgefunden. Die Beschichtungsmittel 20 und 21 sind im vorliegenden Fall Polymere, die jeweils unterschiedliche Anzahlen an C-C Kohlenstoff-Doppelbindungen aufweisen. Wie schematisch in Fig. 2A angedeutet, weist dabei das erste Beschichtungsmittel 20 eine geringere Anzahl an C-C Doppelbindungen auf, als das zweite Beschichtungsmittel 21. Aufgrund der größeren Anzahl an C-C Doppelbindungen in dem Beschichtungsmittel 21 wird dieses nach der Aushärtung eine größere Härte aufweisen, als das Beschichtungsmittel 20, welches mit weniger C-C Doppelbindungen versehen ist.

Da die beiden Beschichtungsmittel 20 und 21 nass-in-nass aufgetragen werden, kommt es ausgehend von der Grenzfläche 22 zwischen den beiden Schichten zu einer Vermischung derselben, wie es in Fig. 2B angedeutet ist.

Dies bedeutet dass im grenznahen Bereich zur Grenzschicht 22 durch den Vermischungsprozess in der unterliegenden Schicht mehr Doppelbindungen vorhanden sind und dementsprechend im grenznahen Bereich der darüberliegenden Schicht etwas weniger Doppelbindungen, wie vor der Vermischung. Fig. 2C zeigt die beiden Schichten, nachdem die Vermischung noch etwas weiter vorgeschritten ist und einen geeigneten Durchmischungsgrad erreicht hat. Wenn zu diesem Zeitpunkt die Aushärtung der Beschichtungsmittel, beispielsweise mittels UV-Strahlung, erfolgt, wird dieser Durchmischungsgrad festgelegt, da in den ausgehärteten Schichten naturgemäß keine Durchmischung mehr erfolgen kann.

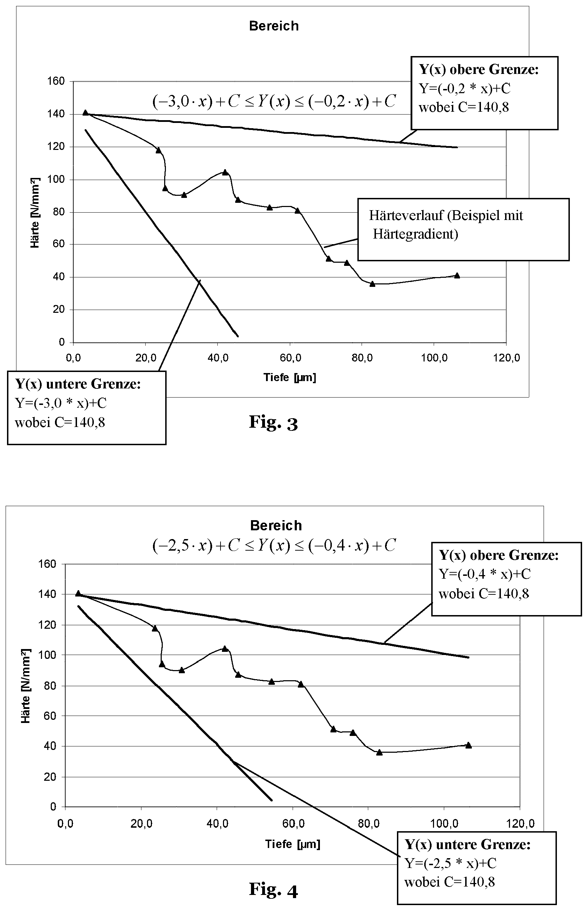

Im Diagramm der Fig. 3 ist der Härteverlauf einer Beschichtung mit Härtegradient aufgetragen. Das Beispiel mit Härtegradient bestand aus einer abgeschliffenen und mit einer Grundierung versehenen Holzwerkstoffplatte, auf die zwei unterschiedliche Beschichtungsmittel nass-in-nass aufgetragen wurden. Das zuerst aufgetragene Beschichtungsmittel bestand aus ca. 35 % 1, 6-Hexandioldiacrylat und ca. 65 % Polyesteracrylat und wurde mit 45 g/m$^2$ aufgetragen. Das zweite Beschichtungsmittel, das auf die noch feuchte erste Schicht aufgetragen wurde, bestand aus ca. 70 % Polyurethanacrylsäureester und ca. 30 % Dipropylenglycoldiacrylat und wurde mit 40 g/m$^2$ aufgetragen. Nach der Auftragung der zweiten Schicht wurde 10 Sekunden gewartet, um den viskosen flüssigen Materialien die Gelegenheit zu geben sich zu vermischen. Anschließend wurden die beiden Schichten gemeinsam vollständig ausgehärtet.

Ein Beispiel ohne Härtegradient bestand aus einer herkömmlichen Beschichtung, wobei mehrere dünne Materialschichten einzeln aufgetragen wurden und wobei zwischen den jeweiligen Auftragsvorgängen die zuvor aufgetragene Schicht ausgehärtet wurde. Die unteren 3 Schichten bestanden aus einer Mischung aus 70 % Polyesteracrylat und 30 % 1, 6- Hexandioldiacrylat mit einer Auftragsstärke von je 12 g/m$^2$. Die beiden oberen Schichten bestanden aus 70 % Polyurethanglycoldiacrylat und 30 % Dipropylenacrylsäureester und die beiden oberen Schichten enthielten 15 % Korund mit einer mittleren Korngröße von D 50 von 25 $\mu$m.

Die Prüfung wurde nach der europäischen Norm für Laminatböden DIN EN 13329 mit einem Taber Abraser Prüfgerät 5151 der Firma Taber Industries durchgeführt. Jeweils nach 200 Umdrehungen mit S-41-Schleifpapier wurden die Härte und Spurentiefe der Proben bestimmt. Die Bestimmung der Martenshärte (registrierende Härteprüfung unter Prüfkrafteinwirkung) wurde gemäß DIN EN ISO 14577 durchgeführt. Als Prüfgerät wurde ein "Fischerscope H100" der Helmut Fischer GmbH eingesetzt. Folgende Prüfparameter wurden verwendet: Maximalkraft: 50/30 mN sowie Messdauer: 20 Sekunden. Die Bestimmung der Spurtiefe wurde mit einem mechanischen Tastschnittmessgerät durchgeführt. Als Prüfgerät wurde ein Perthometer S3P der Firma Perthen verwendet.

Bei der Vermessung der Proben hat sich gezeigt, dass es wahrscheinlich aufgrund der verwendeten relativ weichen Materialien zu mehr oder weniger großen Abweichungen in der Härte einer gegebenen Schichttiefe kommt. Es ist daher notwendig an mehreren Punkten zu messen, um über eine Mittelwertbildung aussagekräftige, repräsentative Daten zu erhalten. Bei den vorgenommenen Messungen wurden die Härte sowie die Spurentiefe nach 200 Umdrehungen des Schleifpapiers jeweils an vier Stellen gemessen. Es hat sich gezeigt, dass vier Messpunkte in den meisten Fällen eine ausreichende Genauigkeit bieten. Selbstverständlich erhält man noch genauere Messergebnisse, wenn man mehr als vier Messpunkte verwendet, wie beispielsweise acht.

In der unten wiedergegebenen Tabelle sind die einzelnen Messwerte für die erfindungsgemäße Probe des Beispiels wiedergegeben. Die Messung erfolgte an der fertig ausgehärteten Beschichtung, d.h. dem Zustand, in dem entsprechende Produkte auch real als Fußbodenpaneele eingesetzt würden.

| Umdrehung | Tiefe Spur [µm] | | | | Tiefe Härtemessung [µm] | | | | Martenshärte [N/mm$^2$] | | | |
|---|---|---|---|---|---|---|---|---|---|---|---|---|
| | 1 | 2 | 3 | 4 | 1 | 2 | 3 | 4 | 1 | 2 | 3 | 4 |
| | | | | | 3,6 | 3,8 | 3,3 | 3,4 | 134,8 | 118,7 | 159,0 | 150,6 |
| MW | | | | | 3,5 | | | | 140,8 | | | |
| 200 | 20,0 | 20,0 | 20,0 | 20,0 | 3,5 | 3,7 | 4,3 | 3,9 | 139,7 | 125,2 | 93,5 | 112,2 |
| MW | 20,0 | | | | 3,9 | | | | 117,7 | | | |
| 400 | 20,0 | 20,0 | 20,0 | 25,0 | 4,5 | 5,0 | 4,0 | 3,9 | 85,9 | 69,9 | 108,9 | 113,2 |
| MW | 21,3 | | | | 4,4 | | | | 94,5 | | | |
| 600 | 25,0 | 25,0 | 25,0 | 30,0 | 4,7 | 4,7 | 4,3 | 4,0 | 80,5 | 79,6 | 95,0 | 106,1 |
| MW | 26,3 | | | | 4,4 | | | | 90,3 | | | |
| 800 | 30,0 | 30,0 | 30,0 | 35,0 | 4,1 | 4,1 | 4,0 | 4,2 | 103,8 | 103,1 | 109,7 | 100,3 |
| MW | 31,3 | | | | 4,1 | | | | 104,2 | | | |
| 1000 | 40,0 | 40,0 | 40,0 | 45,0 | 4,7 | 4,2 | 3,9 | 4,5 | 78,5 | 99,3 | 112,0 | 87,5 |
| MW | 41,3 | | | | 4,3 | | | | 94,3 | | | |
| 1200 | 50,0 | 50,0 | 50,0 | 50,0 | 4,3 | 5,4 | 4,2 | 4,6 | 93,7 | 59,8 | 98,5 | 82,8 |
| MW | 50,0 | | | | 4,6 | | | | 83,7 | | | |
| 1400 | 55,0 | 55,0 | 60,0 | 60,0 | 5,4 | 4,5 | 4,0 | 5,0 | 60,1 | 85,0 | 106,7 | 70,8 |
| MW | 57,5 | | | | 4,7 | | | | 80,7 | | | |
| 1600 | 60,0 | 65,0 | 70,0 | 70,0 | 4,7 | 4,4 | 4,3 | 4,6 | 47,8 | 53,6 | 55,5 | 48,9 |
| MW | 66,3 | | | | 4,5 | | | | 51,5 | | | |
| 1800 | 65,0 | 70,0 | 75,0 | 75,0 | 4,0 | 4,6 | 4,9 | 5,3 | 64,5 | 50,1 | 43,7 | 37,1 |
| MW | 71,3 | | | | 4,7 | | | | 48,9 | | | |
| 2000 | 75,0 | 80,0 | 80,0 | 75,0 | 5,8 | 4,9 | 6,2 | 5,0 | 31,3 | 43,6 | 27,3 | 41,6 |
| MW | 77,5 | | | | 5,5 | | | | 36,0 | | | |
| 2200 | 95,0 | 105,0 | 105,0 | 100,0 | 4,5 | 5,1 | 6,1 | 4,9 | 51,4 | 40,8 | 28,1 | 43,7 |
| MW | 101,3 | | | | 5,2 | | | | 41,0 | | | |

**Tabelle 1:** *Beispiel mit Härtegradient*

In der oben wiedergegebenen Tabelle bezeichnet die Spalte "Umdrehung" die Anzahl der Umdrehungen die mit dem Taber Abraser Prüfgerät durchgeführt wurden. Die Spalte "Tiefe Spur" gibt an, wie viel Mikrometer Material der Beschichtung ausgehend von der ursprünglichen Oberfläche an den vier Messpunkten 1-4 abgetragen wurden. Die Spalte "Tiefe Härtemessung" gibt an, um wie viel Mikrometer der Prüfdorn an den vier Messpunkten 1-4 jeweils in die Beschichtung eingedrungen ist. In der Spalte "Martenshärte" ist dann jeweils die Härte in Newton pro mm$^2$ für die vier Messpunkte 1-4 angegeben. Unterhalb der Einzelwerte ist der jeweilige Mittelwert für die vier Messpunkte angegeben. Aus der oben wiedergegebenen Tabelle lässt sich gut erkennen, dass die Martenshärte abnimmt, je tiefer man in die ausgehärtete, fertige Schicht vordringt. Man erkennt auch, dass bei 800 und 1000 (Gesamt-) Umdrehungen ein leichter Anstieg der Martenshärte zu verzeichnen ist. Dies ist auf eine unregelmäßige Durchmischung der beiden verwendeten Beschichtungsmittel zurückführen, die in der Praxis nur schwer vollständig zu vermeiden ist.

Nichtsdestotrotz erkennt man aus dem Diagramm der Fig. 3 deutlich, das beim Beispiel mit Härtegradient insgesamt ein beinahe kontinuierlicher Härteabfall ohne große Sprünge vorliegt.

Die Mittelwerte des erfindungsgemäßen Prüfkörpers sind in der untenstehenden Tabelle 2 wiedergegeben.

| Umdrehung | Tiefe [μm] | Martenshärte [N/mm²] | Standardabweichung der Martenshärte [N/mm²] |
|---|---|---|---|
|  | 3,5 | 140,8 | 15,4 |
| 200 | 23,9 | 117,7 | 17,0 |
| 400 | 25,6 | 94,5 | 17,6 |
| 600 | 30,7 | 90,3 | 11,0 |
| 800 | 42,1 | 104,2 | 3,4 |
| 1000 | 45,8 | 87,5 | 12,6 |
| 1200 | 54,6 | 82,8 | 14,9 |
| 1400 | 62,2 | 80,7 | 17,4 |
| 1600 | 70,8 | 51,4 | 3,2 |
| 1800 | 76,0 | 48,9 | 10,1 |
| 2000 | 83,0 | 35,9 | 6,8 |
| 2200 | 106,4 | 41,0 | 8,4 |

**Tabelle 2:** *Mittelwerte des Beispiels mit Härtegradient*

Die Werte des Vergleichsprüfkörpers ohne Härtegradient sind in den unten angegebenen Tabellen 3 und 4 dargestellt.

| Umdrehung | Tiefe Spur [μm] | | | | Tiefe Härtemessung [μm] | | | | Martenshärte [N/mm²] | | | |
|---|---|---|---|---|---|---|---|---|---|---|---|---|
|  | 1 | 2 | 3 | 4 | 1 | 2 | 3 | 4 | 1 | 2 | 3 | 4 |
|  |  |  |  |  | 3,1 | 3,5 | 3,1 | 3,0 | 180,6 | 141,8 | 173,1 | 192,4 |
| MW |  |  |  |  | 3,2 | | | | 172,0 | | | |
| 200 | 30,0 | 25,0 | 25,0 | 25,0 | 4,2 | 4,2 | 3,7 | 4,7 | 99,9 | 99,6 | 124,5 | 79,3 |
| MW | 26,3 | | | | 4,2 | | | | 100,8 | | | |
| 400 | 35,0 | 35,0 | 35,0 | 35,0 | 3,7 | 3,8 | 4,0 | 4,1 | 126,9 | 117,2 | 110,1 | 105,3 |
| MW | 35,0 | | | | 3,9 | | | | 114,9 | | | |
| 600 | 45,0 | 45,0 | 45,0 | 45,0 | 3,7 | 3,8 | 4,6 | 4,8 | 128,4 | 122,2 | 83,2 | 74,7 |
| MW | 45,0 | | | | 4,2 | | | | 102,1 | | | |
| 800 | 50,0 | 50,0 | 50,0 | 50,0 | 4,0 | 4,7 | 4,8 | 4,0 | 108,2 | 80,8 | 75,4 | 110,9 |
| MW | 50,0 | | | | 4,4 | | | | 93,8 | | | |
| 1000 | 60,0 | 60,0 | 60,0 | 60,0 | 3,5 | 3,1 | 4,0 | 3,6 | 143,7 | 177,4 | 108,0 | 129,9 |
| MW | 60,0 | | | | 3,6 | | | | 139,8 | | | |
| 1200 | 65,0 | 70,0 | 70,0 | 70,0 | 3,3 | 3,4 | 3,6 | 3,0 | 160,7 | 145,1 | 135,0 | 185,1 |
| MW | 68,8 | | | | 3,3 | | | | 156,5 | | | |
| 1400 | 70,0 | 75,0 | 75,0 | 75,0 | 3,3 | 3,0 | 3,1 | 3,8 | 157,7 | 191,6 | 178,0 | 119,3 |
| MW | 73,8 | | | | 3,3 | | | | 161,7 | | | |
| 1600 | 75,0 | 80,0 | 80,0 | 80,0 | 2,3 | 2,9 | 2,6 | 2,4 | 183,8 | 124,8 | 147,9 | 174,4 |
| MW | 78,8 | | | | 2,6 | | | | 157,7 | | | |
| 1800 | 80,0 | 85,0 | 85,0 | 85,0 | 3,8 | 3,0 | 3,4 | 3,1 | 71,4 | 112,3 | 88,6 | 107,0 |
| MW | 83,8 | | | | 3,3 | | | | 94,8 | | | |
| 2000 | 85,0 | 90,0 | 85,0 | 85,0 | 5,1 | 3,5 | 2,6 | 3,0 | 40,9 | 82,3 | 146,4 | 112,6 |
| MW | 86,3 | | | | 3,6 | | | | 95,6 | | | |
| 2200 | 85,0 | 95,0 | 90,0 | 90,0 | 3,6 | 3,0 | 3,0 | 2,7 | 81,2 | 116,0 | 114,5 | 137,5 |
| MW | 90,0 | | | | 3,1 | | | | 112,3 | | | |
| 2400 | 90,0 | 100,0 | 100,0 | 95,0 | 3,7 | 5,2 | 3,1 | 3,0 | 77,6 | 39,7 | 108,2 | 111,8 |
| MW | 96,3 | | | | 3,8 | | | | 84,3 | | | |
| 2600 | 100,0 | 100,0 | 105,0 | 100,0 | 5,3 | 3,3 | 5,0 | 3,9 | 37,8 | 92,6 | 42,4 | 67,7 |
| MW | 101,3 | | | | 4,4 | | | | 60,1 | | | |

**Tabelle 3:** *Probe ohne Härtegradient*

| Umdrehung | Tiefe [µm] | Martenshärte [N/mm²] | Standardabweichung der Martenshärte [N/mm²] |
|---|---|---|---|
| | 3,2 | 172,0 | 18,7 |
| 200 | 30,4 | 100,8 | 16,0 |
| 400 | 38,9 | 114,9 | 8,1 |
| 600 | 49,2 | 102,1 | 23,5 |
| 800 | 54,4 | 93,8 | 15,9 |
| 1000 | 63,6 | 139,8 | 25,2 |
| 1200 | 72,1 | 156,5 | 18,9 |
| 1400 | 77,1 | 169,7 | 27,3 |
| 1600 | 81,3 | 157,7 | 23,1 |
| 1800 | 87,1 | 94,8 | 16,1 |
| 2000 | 89,8 | 95,6 | 38,9 |
| 2200 | 93,1 | 112,3 | 20,1 |
| 2400 | 100,0 | 84,3 | 29,0 |
| 2600 | 105,7 | 60,1 | 21,9 |

**Tabelle 4:** *Mittelwerte der Probe ohne Härtegradient*

Experimentell hat sich herausgestellt, dass besonders gute mechanische Eigenschaften der fertigen Gesamtschicht erzielt werden können, wenn der Härtegradient der fertigen Gesamtschicht - wie er beispielhaft in Figur 3 dargestellt ist - im Wesentlichen folgender Beziehung entspricht:

$$(-3,0 \cdot x) + C \leq Y(x) \leq (-0,2 \cdot x) + C$$

wobei:

*x* der Absolutwert der Tiefe in µm der Beschichtung von der Oberfläche der Beschichtung her gesehen ist;
*Y(x)* der Absolutwert der Härte in N/mm² bei einer bestimmten Tiefe x ist; und
*C* der Absolutwert der Anfangshärte in N/mm² der Beschichtung bei ca. $x \approx$ 0-5 µm Tiefe ist.

Unter den "Absolut"-Werten ist zu verstehen, dass in die obige Formel nur die reinen Zahlenwerte eingegeben werden, also ohne die zugehörige Maßeinheit "µm" bzw. "N/mm²". Wenn beispielsweise der Anfangswert des obigen Beispiels mit Härtegradient 140,8 N/mm² beträgt (siehe Tabelle 2), so werden in die obige Tabelle nur die Absolutwerte, also C=140,8 eingesetzt. Ebenso werden für x nur die Absolutwerte, also beispielsweise x=3,5 eingesetzt. Daraus ergeben sich beispielsweise obere und untere Grenzen für Y(x=3,5) von 140,1 bzw. 130,3. Bei einer Tiefe von x=40 µm ergibt sich dann beispielsweise 132,8 für die oberen Grenze bzw. 20,8 für die untere Grenze. Diese oberen und unteren Grenzen für Y(x) haben die Maßeinheit N/mm². Wichtig ist, dass die Absolutwerte ausgehend von den bezeichneten Maßeinheiten "µm" bzw. "N/mm²" in der Formel verwendet werden und nicht bsp. ausgehend von "mm" oder "N/m²". Es sollte dem Fachmann klar sein, dass die obige Formel keine mathematische Formel zur Beschreibung des Härtegradienten selbst ist, sondern vielmehr einen Bereich definiert, in dem dieser verlaufen soll.

Der Anfangswert der Härte der Beschichtung ist der Wert in den ersten wenigen µm der Beschichtung. Aufgrund der üblicherweise verwendeten Messmethode mittels eines Prüfdorns, der einige µm in die Beschichtung eindringt, ist es schwierig die Härte für die Eindringtiefe "0 µm" zu ermitteln. Die Formulierung "im Wesentlichen" ist daher gewählt, weil es schwierig ist eine perfekt gleichmäßige Durchmischung der Materialien zu erreichen, so dass es in der Realität immer wieder zu einzelnen kleinen Ausreißern kommen kann, wie beispielsweise der Härtewert von 104,2 Newton/mm² bei einer Tiefe von 42,1 µm (siehe Tabelle 2) des oben diskutierten Beispiels mit Härtegradient. Außerdem sind die Werte extrem nahe an der Oberfläche der Holzwerkstoffplatte in der Regel ungenau, da die zu vermessende Restschichtdicke eine gewisse Mindestdicke aufweisen muss, um sinnvolle Messungen zu ermöglichen. Die Restschichtdicke sollte für sinnvolle Messungen daher mindestens 5 µm, bevorzugt 10 µm und noch weiter bevorzugt mindestens 20 µm betragen. Mit anderen Worten, die letzten 20 µm der Schicht, nahe der Holzwerkstoffplatte, müssen nicht unbedingt dem oben bezeichneten bevorzugten Härtegradient folgen, obwohl dies natürlich bevorzugt ist.

In einer weiter bevorzugten Ausführungsform folgt der Härtegradient im Wesentlichen folgender Beziehung:

$$(-2,5 \cdot x) + C \leq Y(x) \leq (-0,4 \cdot x) + C$$

Und in einer noch weiter bevorzugten Ausführungsform im Wesentlichen:

$$(-2,0 \cdot x) + C \leq Y(x) \leq (-0,6 \cdot x) + C$$

In den Figuren 4 bis 6 ist die Bedeutung der oben bezeichneten Beziehungen der Härtegradienten anhand des Beispiels mit Härtegradient verdeutlicht. Es sollte klar sein, dass die angegebenen absoluten Werte für Härte und Tiefe lediglich beispielhaft sind. Selbstverständlich ist es ebenso möglich, Gesamtschichten mit deutlich größeren Dicken oder geringeren Dicken aufzutragen. Außerdem hängt der Absolutwert der Härte natürlich von den verwendeten Materialien ab und kann ebenfalls größer oder kleiner sein, als die Werte des Beispiels mit Härtegradient. Jedoch ist die Größenordnung der angegebenen Werte für das Beispiel mit Härtegradient für die Verwendung in einem Fußbodenpaneel besonders bevorzugt und geeignet.

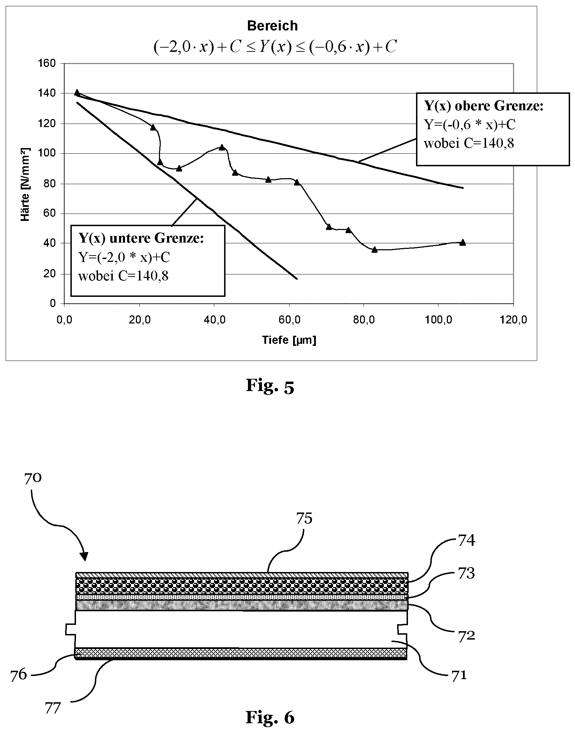

Figur 6 zeigt in schematischer Darstellung ein erfindungsgemäßes Paneel. Das dargestellte Paneel ist ein Fußboden-Paneel und umfasst eine Trägerschicht 71 aus MDF. Die Figur 7 ist nicht maßstabsgetreu: die Trägerschicht 71 ist in der Praxis mehrere Millimeter dick, wohingegen insbesondere die auf der Vorderseite vorgesehenen Schichten insgesamt nur wenige hundert Mikrometer dick sind. Auf der Vorderseite der Trägerschicht 71 ist eine Grundierungsschicht 72 aufgetragen. Die Grundierungsschicht 72 basiert auf einem wässrigen Acrylatsystem und wird vorzugsweise mit einem Vorhangbeschichtungsverfahren aufgebracht. Nach Trocknen der Grundierungsschicht 72 wird mittels eines Digitaldrucks unter Verwendung einer polymerisierbaren Druckfarbe die Dekorschicht 73 aufgebracht. Optional können zwischen Grundierung 72 und Dekorschicht 73 weitere Schichten vorgesehen sein, wie insbesondere eine geeignete Primerschicht. Ähnlich können optional zwischen Trägerschicht 71 und Grundierung 72 weitere Schichten vorgesehen sein, wie insbesondere Spachtelschichten aber auch weitere Primerschichten, um eine Haftung der Grundierung 72 auf der Vorderseite der Trägerschicht 71 zu verbessern. Derartige weitere Primer- und Spachtelschichten sind dem Fachmann bekannt, so dass auf eine detailliertere Erläuterung derselben hier verzichtet wird. Direkt auf die Dekorschicht 73, für die eine polymerisierbare Druckfarbe verwendet wurde, beispielsweise basierend auf einem polymerisierbaren Acrylat, ist eine Polymerschicht 74 aufgetragen, die, wie eingangs erläutert, einen Härtegradienten aufweist. Die Dekorschicht 73 sowie die Polymerschicht 74 sind gemeinsam ausgehärtet. Vorzugsweise weisen die Schichten hierzu Fotoinitiatoren auf, so dass beispielsweise durch Bestrahlung mit UV-Strahlen eine Polymerisation und damit Aushärtung der beiden Schichten 73 und 74 erfolgt. Optional ist auf der ausgehärteten Polymerschicht 74 eine dünne weitere Schicht 75 aus einem Hochglanzlack aufgetragen.

An der Rückseite der Trägerschicht 71 ist eine dünne Lage einer Trittschalldämmung 76 vorgesehen. Die Trittschalldämmung kann beispielsweise ein dünnes Faserflies von 1 bis 2 mm sein. Als abschließende Schicht an der Rückseite der Trägerschicht ist zudem eine Folie 77 vorgesehen, die als Feuchtigkeitsschutz dient.

## Patentansprüche

1. Paneel, insbesondere Wand-, Decken,- oder Fußbodenpaneel, umfassend eine Trägerschicht (71) mit einer Vorderseite und einer Rückseite, wobei die Trägerschicht (71) zumindest an ihrer Vorderseite von der Vorderseite ausgehend folgende Schichten umfasst:

   - eine Grundierungschicht (72);
   - eine Dekorschicht (73) umfassend eine polymerisierbare Druckfarbe; und
   - eine Polymerschicht (74), welche Polymerschicht einen Härtegradienten aufweist, so dass die Härte der Polymerschicht mit zunehmender Tiefe von der Oberfläche der Polymerschicht her gesehen abnimmt
   - wobei die Druckfarbe der Dekorschicht (73) und die Polymerschicht (74) gemeinsam ausgehärtet wurden; und
   - wobei zwischen der Dekorschicht (73) und der Polymerschicht (74) keine weitere Schicht, insbesondere keine Primer-Schicht vorhanden ist.

2. Paneel nach Anspruch 1, **dadurch gekennzeichnet, dass** die Druckfarbe auf einem polymerisierbaren Acrylat basiert.

**3.** Paneel nach einem der vorhergehenden Ansprüche, **dadurch gekennzeichnet, dass** die Dekorschicht (73) im Digitaldruck aufgebracht wurde.

**4.** Paneel nach einem der vorhergehenden Ansprüche, **dadurch gekennzeichnet, dass** der Härtegradient folgender Beziehung entspricht:

$$(-3{,}0 \cdot x) + C \leq Y(x) \leq (-0{,}2 \cdot x) + C$$

wobei:

*x* der Absolutwert der Tiefe in $\mu$m der Beschichtung von der Oberfläche der Beschichtung her gesehen ist;
*Y(x)* der Absolutwert der Härte in N/mm$^2$ bei einer bestimmten Tiefe x ist; und
*C* der Absolutwert der Anfangshärte in N/mm$^2$ der Beschichtung bei ca. $x \approx$ 0-5 $\mu$m Tiefe ist.

**5.** Paneel nach Anspruch 4, **dadurch gekennzeichnet, dass** der Härtegradient folgender Beziehung entspricht:

$$(-2{,}5 \cdot x) + C \leq Y(x) \leq (-0{,}4 \cdot x) + C \, ;$$

und vorzugsweise

$$(-2{,}0 \cdot x) + C \leq Y(x) \leq (-0{,}6 \cdot x) + C \, .$$

**6.** Paneel nach einem der vorhergehenden Ansprüche, **dadurch gekennzeichnet, dass** die Polymerschicht (74) eine Dicke von 20 bis 300 $\mu$m hat, vorzugsweise 40 bis 250 $\mu$m, mehr bevorzugt 50 bis 220 $\mu$m und am meisten bevorzugt von 60 bis 180 $\mu$m hat.

**7.** Paneel nach einem der vorhergehenden Ansprüche, **dadurch gekennzeichnet, dass**:

- die Grundierung (72) eine Dicke von 20 bis 300 $\mu$m hat, vorzugsweise 40 bis 250 $\mu$m, mehr bevorzugt 50 bis 220 $\mu$m und am meisten bevorzugt von 60 bis 180 $\mu$m hat;
- die Grundierung (72) kein UV-aushärtbarer Lack ist;
- die Grundierung (72) auf einem wässrigen Arylatsystem basiert und vorzugsweise geeignet ist, um mittels eines Vorhangbeschichtungs-Verfahrens aufgetragen zu werden; und/oder
- die Grundierung (72) mittels eines Vorhangbeschichtungs-Verfahrens aufgetragen wurde.

**8.** Paneel nach einem der vorhergehenden Ansprüche, **dadurch gekennzeichnet, dass** die Polymerschicht (74) auf einem oder mehreren der folgenden Acrylate basiert: 1,6-Hexandioldiacrylat, Polyesteracrylat, Polyurethanacrylsäureester und Dipropylenglycoldiacrylat.

**9.** Paneel nach einem der vorhergehenden Ansprüche, **dadurch gekennzeichnet, dass** die Oberfläche des beschichteten Paneels beim Gitterschnitttest nach DIN ISO 2409 einen Gitterschnitt-Kennwert von mindestens 2 erreicht, vorzugsweise mindestens 1 und am meisten bevorzugt von 0 erreicht.

**10.** Verfahren zur Beschichtung eines Paneels, umfassend die folgenden Schritte:

(i) Bereitstellen einer Trägerplatte;
(ii) Auftragen einer Grundierung;
(iii) Auftragen einer Dekorschicht mittels einer polymerisierbaren Druckfarbe, insbesondere basierend auf einem polymerisierbaren Acrylat;
(iv) optional: teilweises Aushärten der Druckfarbe;
(v) Auftragen eines ersten flüssigen Beschichtungsmittels auf die nicht vollständig ausgehärtete Druckfarbe;
(vi) Auftragen zumindest eines zweiten flüssigen Beschichtungsmittels auf das noch feuchte erste Beschichtungsmittel, so dass eine teilweise Vermischung der Beschichtungsmittel stattfindet;
(vii) gemeinsames Aushärten von zumindest der aufgetragenen Beschichtungsmittel und der Druckfarbe mittels Strahlung, wobei die ausgehärteten Beschichtungsmittel einen Härtegradient aufweisen, wobei die Härte der Beschichtung mit zunehmender Tiefe von der Oberfläche der resultierenden Beschichtung her gesehen abnimmt, wobei zwischen der Dekorschicht und dem ersten flüssigen Beschichtungsmittel keine weitere Schicht, insbesondere keine Primer-Schicht vorhanden ist.

11. Verfahren nach Anspruch 10, **dadurch gekennzeichnet, dass**:

- die Grundierung in Schritt (ii) mittels eines Vorhangbeschichtungs-Verfahrens aufgetragen wird;
- nach Schritt (ii) die Grundierung vor Schritt (iii) getrocknet wird;
- die Dekorschicht mittels Digitaldruck aufgebracht wird; und/oder
- die Beschichtungsmittel direkt auf die Dekorschicht aufgetragen werden.

12. Verfahren nach einem der vorhergehenden Verfahrensansprüche, **dadurch gekennzeichnet, dass** Schritt (vii) durchgeführt wird, so dass die ausgehärteten Beschichtungsmittel einen Härtegradient aufweisen, wobei die Härte der Beschichtung mit zunehmender Tiefe von der Oberfläche der resultierenden Beschichtung her gesehen abnimmt und wobei der Härtegradient folgender Beziehung entspricht:

$$(-3,0 \cdot x) + C \leq Y(x) \leq (-0,2 \cdot x) + C$$

wobei:

$x$ der Absolutwert der Tiefe in $\mu$m der Beschichtung von der Oberfläche der Beschichtung her gesehen ist;
$Y(x)$ der Absolutwert der Härte in N/mm$^2$ bei einer bestimmten Tiefe x ist; und
$C$ der Absolutwert der Anfangshärte in N/mm$^2$ der Beschichtung bei ca. $x \approx$ 0-5 $\mu$m Tiefe ist.

13. Verfahren nach Anspruch 12, **dadurch gekennzeichnet, dass** der Härtegradient folgender Beziehung entspricht:

$$(-2,5 \cdot x) + C \leq Y(x) \leq (-0,4 \cdot x) + C ;$$

und vorzugsweise

$$(-2,0 \cdot x) + C \leq Y(x) \leq (-0,6 \cdot x) + C .$$

14. Verfahren nach einem der vorhergehenden Verfahrensansprüche, **dadurch gekennzeichnet, dass**:

- die Beschichtungsmittel in einer Dicke von insgesamt 20 bis 300 $\mu$m, vorzugsweise 40 bis 250 $\mu$m, mehr bevorzugt 50 bis 220 $\mu$m und am meisten bevorzugt von 60 bis 180 $\mu$m aufgetragen werden;
- die Grundierung in einer Dicke von 20 bis 300 $\mu$m, vorzugsweise 40 bis 250 $\mu$m, mehr bevorzugt 50 bis 220 $\mu$m und am meisten bevorzugt von 60 bis 180 $\mu$m aufgetragen wird;
- die Grundierung kein UV-aushärtbarer Lack ist; und/oder
- die Beschichtungsmittel auf einem oder mehreren der folgenden Acrylate basieren: 1,6-Hexandioldiacrylat, Polyesteracrylat, Polyurethanacrylsäureester und Dipropylenglycoldiacrylat.

15. Paneel oder Verfahren nach einem der vorhergehenden Ansprüche, **dadurch gekennzeichnet, dass** die Dekorschicht (73) aus der Druckfarbe besteht.

**Claims**

1. Panel, in particular wall-, ceiling- or floor-panel, comprising a carrier layer (71) with a front side and a rear side, wherein the carrier layer (71) comprises at least at its front side as seen from the front side the following layers:

- a primer layer (72);
- a decor layer (73) comprising a polymerizable print color; and

- a polymer layer (74), which polymer layer (74) comprises a hardness gradient, so that the hardness of the polymer layer continuously decreases with increasing depth as seen from the surface of the polymer layer,
- wherein the print color of the decor layer (73) and the polymer layer (74) have been cured together, and
- wherein, between the decor layer (73) and the polymer layer (74), no further layers, in particular no primer layer, is present.

2. Panel according to claim 1, **characterized in that** the print color bases on a polymerizable acrylate.

3. Panel according to one of the preceding claims, **characterized in that** the decor layer (73) has been applied by means of digital print.

4. Panel according to one of the preceding claims, **characterized in that** the hardness gradient follows the following relation:

$$(-3,0 \cdot x) + C \leq Y(x) \leq (-0,2 \cdot x) + C$$

wherein

$x$ is the absolute value of the depth in micrometer of the coating as seen from the surface of the coating;
$Y(x)$ is the absolute value of the hardness in N/mm$^2$ at a specific depth $x$; and
$C$ is the absolute value of the initial hardness in N/mm$^2$ of the coating at about $x \approx 0$ - 5 $\mu$m depth.

5. Panel according to claim 4, **characterized in that** the hardness gradient corresponds to the following relation:

$$(-2,5 \cdot x) + C \leq Y(x) \leq (-0,4 \cdot x) + C \, ;$$

and preferably

$$(-2,0 \cdot x) + C \leq Y(x) \leq (-0,6 \cdot x) + C \, .$$

6. Panel according to one of the preceding claims, **characterized in that** the polymer layer (74) comprises a thickness of 20 to 300 $\mu$m, preferably of 40 to 250 $\mu$m, more preferred of 50 to 220 $\mu$m and most preferred of 60 to 180 $\mu$m.

7. Panel according to one of the preceding claims, **characterized in that**:

- the primer layer (72) comprises a thickness of 20 to 300 $\mu$m, preferably of 40 to 250 $\mu$m, more preferred of 50 to 220 $\mu$m and most preferred of 60 to 180 $\mu$m;
- the primer layer (72) is no UV-curing lacquer;
- the primer layer (72) bases on an aqueous acrylate system and is preferably suitable to be applied by means of a curtain coating method; and/or
- the primer layer (72) has been applied by means of a curtain coating method.

8. Panel according to one of the preceding claims, **characterized in that** the polymer layer (74) bases on one or more of the following acrylates: 1,6-hexanediol diacrylate, polyester acrylate, polyurethane acrylic acid ester and dipropylene glycol diacrylate.

9. Panel according to one of the preceding claims, **characterized in that** the surface of the coated panel achieves in the grid cut test according to DIN ISO 2409 a grid cut parameter of at least 2, preferably of at least 1 and most preferred of o.

10. Method for the coating of a panel, comprising the following steps:

(i) providing a carrier board;
(ii) applying a primer layer;

(iii) applying a decor layer by means of a polymerizable print color, in particular basing on a polymerizable acrylate;

(iv) optionally: partial curing of the print color;

(v) applying a first liquid coating agent onto the incompletely cured print color;

(vi) applying at least a second liquid coating agent onto the still wet first coating agent so that a partial mixing of the coating agents takes place; and

(vii) curing of at least the applied coating agents and the print color together by means of radiation, wherein the cured coating agents comprise a hardness gradient, wherein the hardness of the coating decreases with increasing depth as seen from the surface of the resulting coating, wherein, between the decor layer and the first liquid coating agent, no further layers, in particular no primer layer, is present.

11. Method according to claim 10, **characterized in that**:

- the primer layer in step (ii) is applied by means of a curtain coating method;
- the primer layer is dried after step (ii) and before step (iii);
- the decor layer is applied by means of digital print; and/or
- the coating agents are directly applied onto the decor layer.

12. Method according to one of the preceding method claims, **characterized in that** step (vii) is carried out **in that** the cured coating agents comprise a hardness gradient, wherein the hardness of the coating decreases with increasing depth as seen from the surface of the resulting coating and wherein the hardness gradient corresponds to the following relation:

$$(-3,0 \cdot x) + C \leq Y(x) \leq (-0,2 \cdot x) + C$$

wherein:

$x$ is the absolute value of the depth in $\mu$m of the coating as seen from the surface of the coating;

$Y(x)$ is the absolute value of the hardness in N/mm$^2$ at a specific depth $x$; and

$C$ is the absolute value of the initial hardness in N/mm$^2$ of the coating at about $x \approx 0$ - 5 $\mu$m depth.

13. Method according claim 12, **characterized in that** the hardness gradient corresponds to the following relation:

$$(-2,5 \cdot x) + C \leq Y(x) \leq (-0,4 \cdot x) + C$$

and preferably

$$(-2,0 \cdot x) + C \leq Y(x) \leq (-0,6 \cdot x) + C \,.$$

14. Method according to one of the preceding method claims, **characterized in that**:

- the coating agents comprise a total thickness of 20 to 300 $\mu$m, preferably of 40 to 250 $\mu$m, more preferred of 50 to 220 $\mu$m and most preferred of 60 to 180 $\mu$m
- the primer layer comprises a thickness of 20 to 300 $\mu$m, preferably of 40 to 250 $\mu$m, more preferred of 50 to 220 $\mu$m and most preferred of 60 to 180 $\mu$m;
- the primer layer is no UV-curing lacquer; and/or
- the coating agents base on one or more of the following acrylates: 1,6-hexanediol diacrylate, polyester acrylate, polyurethane acrylic acid ester and dipropylene glycol diacrylate.

15. Panel or method according to one of the preceding claims, **characterized in that** the decor layer (73) consists of print color.

**Revendications**

1. Panneau, en particulier panneau mural, de plafond ou de plancher, comprenant une couche support (71) comportant une face avant et une face arrière, la couche support (71) comprenant, au moins sur sa face avant, les couches suivantes, en partant de la face avant :

   - une couche de fond (72) ;
   - une couche décorative (73) comprenant une encre d'imprimerie polymérisable ; et
   - une couche polymère (74), laquelle couche polymère présente un gradient de dureté de telle sorte que la dureté de la couche polymère diminue au fur et à mesure qu'augmente la profondeur à partir de la surface de la couche polymère,
   - l'encre d'imprimerie de la couche décorative (73) et la couche polymère (74) ayant subi un durcissement commun ; et
   - aucune couche supplémentaire, en particulier aucune couche primaire, n'étant présente entre la couche décorative (73) et la couche polymère (74).

2. Panneau selon la revendication 1, **caractérisé en ce que** l'encre d'imprimerie est à base d'un acrylate polymérisable.

3. Panneau selon l'une des revendications précédentes, **caractérisé en ce que** la couche décorative (73) a été appliquée par impression numérique.

4. Panneau selon l'une des revendications précédentes, **caractérisé en ce que** le gradient de dureté satisfait à la relation suivante :

$$(-3,0 \cdot x) + C \leq Y(x) \leq (-0,2 \cdot x) + C$$

   dans laquelle :

   $x$ est la valeur absolue de la profondeur, en micromètre du revêtement, à partir de la surface du revêtement ;
   $Y(x)$ est la valeur absolue de la dureté en N/mm$^2$ à une certaine profondeur x ; et
   $C$ est la valeur absolue de la dureté initiale en N/mm$^2$ du revêtement, pour une profondeur approximative $x$ » 0 à 5 $\mu$m.

5. Panneau selon la revendication 4, **caractérisé en ce que** le gradient de dureté satisfait à la relation suivante :

$$(-2,5 \cdot x) + C \leq Y(x) \leq (-0,4 \cdot x) + C \ ;$$

   et de préférence

$$(-2,0 \cdot x) + C \leq Y(x) \leq (-0,6 \cdot x) + C \ .$$

6. Panneau selon l'une des revendications précédentes, **caractérisé en ce que** la couche polymère (74) a une épaisseur de 20 à 300 $\mu$m, de préférence de 40 à 250 $\mu$m, plus préférentiellement de 50 à 220 $\mu$m et tout spécialement de 60 à 180 $\mu$m.

7. Panneau selon l'une des revendications précédentes, **caractérisé en ce que**

   - la couche de base (72) a une épaisseur de 20 à 300 $\mu$m, de préférence de 40 à 250 $\mu$m, plus préférentiellement de 50 à 220 $\mu$m et tout spécialement de 60 à 180 $\mu$m ;
   - la couche de base (72) n'est pas un vernis durcissable aux UV ;
   - la couche de base (72) se fonde sur un système d'arylate aqueux et de préférence est apte à être appliquée par un procédé de revêtement au rideau ; et/ou
   - la couche de fond (72) a été appliquée à l'aide d'un procédé de revêtement au rideau.

**8.** Panneau selon l'une des revendications précédentes, **caractérisé en ce que** la couche polymère (74) est à base d'un ou plusieurs des acrylates suivants : diacrylate de 1,6-hexanediol, acrylate de polyester, acrylate de polyuréthanne et diacrylate de dipropylèneglycol.

**9.** Panneau selon l'une des revendications précédentes, **caractérisé en ce que** la surface du panneau revêtu atteint, dans l'essai de quadrillage selon DIN ISO 2409, une caractéristique de quadrillage d'au moins 2, de préférence d'au moins 1 et tout spécialement de 0.

**10.** Procédé de revêtement d'un panneau, comprenant les étapes suivantes :

(i) fourniture d'une plaque support ;
(ii) application d'une couche de fond ;
(iii) application d'une couche décorative à l'aide d'une encre d'imprimerie polymérisable, en particulier à base d'un acrylate polymérisable ;
(iv) en option : durcissement partiel de l'encre d'imprimerie ;
(v) application d'une première composition de revêtement liquide sur l'encre d'imprimerie non entièrement durcie ;
(vi) application d'au moins une deuxième composition de revêtement liquide sur la première composition de revêtement encore humide, de façon que se produise un mélange partiel des compositions de revêtement ;
(vii) durcissement commun au moins du revêtement appliqué et de l'encre d'imprimerie, à l'aide d'un rayonnement, les compositions de revêtement durcies présentant un gradient de dureté, la dureté du revêtement diminuant au fur et à mesure qu'augmente la profondeur à partir de la surface du revêtement obtenu, aucune couche supplémentaire, en particulier aucune couche primaire, n'étant présente entre la couche décorative et la première composition de revêtement liquide.

**11.** Procédé selon la revendication 10, **caractérisé en ce que**

- la couche de base de l'étape (ii) est appliquée par un procédé de revêtement au rideau ;
- après l'étape (ii), la couche primaire est séchée avant l'étape (iii) ;
- la couche décorative est appliquée par impression numérique ; et/ou
- les compositions de revêtement sont appliquées directement sur la couche décorative.

**12.** Procédé selon l'une des revendications précédentes, **caractérisé en ce que** les compositions de revêtement durcies présentent un gradient, la dureté du revêtement diminuant au fur et à mesure qu'augmente la profondeur, à partir de la surface du revêtement obtenu, et le gradient de dureté satisfaisant à la relation suivante :

$$(-3,0 \cdot x) + C \leq Y(x) \leq (-0,2 \cdot x) + C$$

dans laquelle :

$x$ est la valeur absolue de la profondeur, en micromètre du revêtement, à partir de la surface du revêtement ;
$Y(x)$ est la valeur absolue de la dureté en N/mm$^2$ à une certaine profondeur x ; et
$C$ est la valeur absolue de la dureté initiale en N/mm$^2$ du revêtement, pour une profondeur approximative x » 0 à 5 μm.

**13.** Procédé selon la revendication 12, **caractérisé en ce que** le gradient de dureté satisfait à la relation suivante :

$$(-2,5 \cdot x) + C \leq Y(x) \leq (-0,4 \cdot x) + C \; ;$$

et de préférence

$$(-2,0 \cdot x) + C \leq Y(x) \leq (-0,6 \cdot x) + C \; .$$

**14.** Procédé selon l'une des revendications précédentes, **caractérisé en ce que**

- les compositions de revêtement sont appliquées sur une épaisseur totale de 20 à 300 $\mu$m, de préférence de 40 à 250 $\mu$m, plus préférentiellement de 50 à 220 $\mu$m et tout spécialement de 60 à 180 $\mu$m ;
- la couche de base est appliquée sur une épaisseur de 20 à 300 $\mu$m, de préférence de 40 à 250 $\mu$m, plus préférentiellement de 50 à 220 $\mu$m et tout spécialement de 60 à 180 $\mu$m ;
- la couche de fond n'est pas un vernis durcissable aux UV ; et/ou
- le revêtement est à base d'un ou plusieurs des acrylates suivants : diacrylate de 1,6-hexanediol, acrylate de polyester, acrylate de polyuréthanne et diacrylate de dipropylèneglycol.

**15.** Panneau ou procédé selon l'une des revendications précédentes, **caractérisé en ce que** la couche décorative (73) est constituée par l'encre d'imprimerie.

Fig. 1

(Stand der Technik)

19

| | | | | | | | | |
|---|---|---|---|---|---|---|---|---|
| C=C | C=C | C=C | C=C | C=C | C=C | C=C | C=C | 21 |
| C=C | C=C | C=C | C=C | C=C | C=C | C=C | C=C | |
| C=C | C=C | C=C | C=C | C=C | C=C | C=C | C=C | |
| C=C | C=C | C=C | C=C | C=C | C=C | C=C | C=C | 22 |
| C=C | | C=C | | C=C | | | | |
| | C=C | | C=C | | C=C | | 20 | |
| C=C | | C=C | | C=C | | | | |
| | C=C | | C=C | | C=C | | | |

**Fig. 2A**

| | | | | | | | | |
|---|---|---|---|---|---|---|---|---|
| C=C | C=C | C=C | C=C | C=C | C=C | C=C | C=C | 21 |
| C=C | C=C | C=C | C=C | C=C | C=C | C=C | C=C | |
| C=C | C=C | | C=C | C=C | C=C | | C=C | |
| C=C | C=C | C=C | | C=C | C=C | | C=C | 22 |
| C=C | | C=C | C=C | | C=C | C=C | | |
| | C=C | C=C | | C=C | | C=C | C=C | 20 |
| C=C | | | C=C | | | C=C | | |
| | C=C | | | C=C | | | C=C | |

**Fig. 2B**

| | | | | | | | | |
|---|---|---|---|---|---|---|---|---|
| C=C | C=C | C=C | C=C | C=C | C=C | C=C | C=C | 21 |
| C=C | C=C | C=C | | | C=C | C=C | C=C | C=C | |
| C=C | C=C | | C=C | C=C | C=C | | C=C | |
| C=C | | C=C | | C=C | C=C | | C=C | 22 |
| C=C | | C=C | | C=C | C=C | | C=C | |
| | C=C | C=C | | C=C | | C=C | C=C | 20 |
| C=C | | C=C | | | C=C | C=C | | |
| | C=C | | C=C | | | C=C | | |

**Fig. 2C**

**Bereich**

**Y(x) obere Grenze:**
Y=(-0,2 * x)+C
wobei C=140,8

$$(-3,0 \cdot x) + C \leq Y(x) \leq (-0,2 \cdot x) + C$$

Härteverlauf (Beispiel mit
Härtegradient)

**Y(x) untere Grenze:**
Y=(-3,0 * x)+C
wobei C=140,8

**Fig. 3**

**Bereich**
$$(-2,5 \cdot x) + C \leq Y(x) \leq (-0,4 \cdot x) + C$$

**Y(x) obere Grenze:**
Y=(-0,4 * x)+C
wobei C=140,8

**Y(x) untere Grenze:**
Y=(-2,5 * x)+C
wobei C=140,8

**Fig. 4**

**Bereich**

$$(-2,0 \cdot x) + C \leq Y(x) \leq (-0,6 \cdot x) + C$$

**Y(x) obere Grenze:**
Y=(-0,6 * x)+C
wobei C=140,8

**Y(x) untere Grenze:**
Y=(-2,0 * x)+C
wobei C=140,8

**Fig. 5**

**Fig. 6**

**EP 2 834 078 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2007042258 A1
- WO 2008061791 A1
- WO 2008061791 A
- WO 2010070474 A2
- DE 102010011602 A1
- EP 1252937 A1